# EUROPÄISCHE PATENTANMELDUNG

(11) **EP 1 429 086 A2**
(43) Veröffentlichungstag der Anmeldung: **16.06.2004**
(21) Anmeldenummer: 03028423.6
(22) Anmeldetag: 11.12.2003
(51) Int. Cl.: F24H 7/00

(54) **Speicherelement, insbesondere für Latent-Schichtspeicher**

(30) Priorität: 13.12.2002 DE 10258226
(71) Anmelder: Muser, Fritz, 91632 Wieseth (DE); Schmidt, Hans, 91572 Bechhofen (DE)
(72) Erfinder: Muser, Fritz, 91632 Wieseth (DE); Schmidt, Hans, 91572 Bechhofen (DE)
(74) Vertreter: Matschkur, Lindner Blaumeier Patent- und Rechtsanwälte

(57) **Zusammenfassung**

Speicherelement für Latent-Schichtspeicher, insbesondere für die Raumheizung, mit einem vorzugsweise kugelförmigen Behälter für ein Speichermedium mit hohem Enthalpiegehalt, wobei der kugelförmige, vorzugsweise aus zwei Halbkugeln zusammengesetzte, Behälter eine durch einen Niet od. dgl. verschließbare Einfüllöffnung für das zuvor verflüssigte Speichermedium aufweist.

## Beschreibung

Die vorliegende Erfindung bezieht sich auf ein Speicherelement für Latent-Schichtspeicher, insbesondere für die Raumheizung, mit einem vorzugsweise kugelförmigen Behälter für ein Speichermedium mit hohem Enthalpiegehalt.

Auf dem Markt gibt es seit Jahren Speicher für Trinkwasser (Warmwasserspeicher) und Speicher für Heizungswasser (Pufferspeicher). Mit der rasanten Verbreitung der Solartechnik und der regenerativen Techniken, wie Pellets- und Wärmepumpentechnik, sowie der Nutzung der Biothermie, erlangen Speicher jeglicher Art immer größere Bedeutung. Auf dem derzeitigen Markt sind Speicher der verschiedensten Art als sogenannte Massenspeicher mit großen Wasservolumina oder Speicher als Schichtenspeicher verfügbar. Diese Speicher benötigen alle in Gebäuden einen großen Platzbedarf.

Speicher mit Latentmittel sind vereinzelt am Markt zu finden, wobei jedoch bisher die Effizienz noch nicht schlüssig nachgewiesen worden ist. Die Probleme, welche bei diesen Speichern auftreten, sind große zeitliche Verzögerungen im Wärmeübergang vom Medium Wasser auf das Latentmittel und umgekehrt. Der wesentliche Vorteil eines Latentspeichers ist aber, dass in gleichen Volumen bis zu dem dreifachen an Wärmemenge gespeichert werden kann, das heißt, dass in einem Volumen mit Latentmittel von 1.000 Litern die gleiche Wärmemenge wie in einem 3.000 Liter Wasserspeicher gespeichert werden kann.

In der Offenlegungsschrift 23 43 525 ist bereits eine Wärmespeichervorrichtung beschrieben worden, bei der ein Latent-Speichermedium in Kugeln eingebracht ist und eine Vielzahl dieser Kugeln eine Packung bilden, zwischen der das im Austausch mit dem Latent-Speichermittel bestehende Wasser zirkulieren kann. Als Latent-Speichermedium ist in dieser Anmeldung Bariumhydroxydoctahydrat angesprochen.

Der Nachteil dieser Anordnungen liegt in der Schwierigkeit des Einbringens des Latentspeichermittels in die kugelförmigen Behälter. Wie dies im Einzelnen geschehen soll, ist auch in der bereits angesprochenen Offenlegungsschrift nicht näher angegeben; doch scheint die Anordnung so funktionieren zu sollen, dass das Pulver in die Halbkugeln eingebracht werden, die dann anschließend längs eines Flansches miteinander verbunden werden.

Abgesehen von der Kompliziertheit einer solchen Verbindung zweier Halbkugeln mit bereits eingefüllten, bei Raumtemperatur meist pulverförmigen Latent-Speichermittel ergeben sich dabei Schwierigkeiten dahingehend, dass die Füllung der Behälter nach dem erstmaligen Schmelzen im Betriebszustand ungenügend ist, da bis zum Abkühlen zum Erstarrungspunkt das Befüllvolumen sich um ca. 30 % verringert, sodass das Kugelvolumen anschließend nur noch 70 % vom maximalen möglichen Befüllvolumen des Kugelinhalts betragen würde. Die mögliche Speicherkapazität und die Energiedichte der Kugel ist somit stark vermindert.

Der Erfindung liegt daher die Aufgabe zugrunde, ein Speicherelement der eingangs genannten Art so auszugestalten, dass die Kugel eine größte Energiedichte und Speicherkapazität aufweist.

Zur Lösung dieser Aufgabe ist erfindungsgemäß vorgesehen, dass der kugelförmige, vorzugsweise aus zwei Halbkugeln zusammengesetzte, Behälter eine durch einen Niet oder dergleichen verschließbare Einfüllöffnung für das zuvor verflüssigte Speichermedium aufweist, wobei der Behälter bevorzugt aus rostfreiem Stahl, beispielsweise V2A oder V4A Stahl besteht und die Wandstärke etwa 0,6 bis 1,2 mm beträgt.

Als besonders geeignetes Speichermedium hat sich Natriumacetat-Trihydrat erwiesen, wobei aber auch andere Latentspeichermittel natürlich in Frage kommen.

Die erfindungsgemäße Ausbildung eines Speicherelements ermöglicht ein besonders einfaches und zu Speicherelementen mit optimalen Betriebseigenschaften führendes Herstellverfahren, bei dem erfindungsgemäß das Speichermedium auf eine Temperatur oberhalb seines Verflüssigungspunktes erhitzt und über die Einfüllöffnung in den kalten Behälter eingefüllt und anschließend sofort die Einfüllöffnung verschlossen wird.

Die Einfülltemperatur des verflüssigten Speichermediums - im vorstehend angesprochenen Ausführungsbeispiel der Verwendung von Natriumacetat-Trihydrat sind es ca. 90 °C - soll dabei in Ausgestaltung der Erfindung so gewählt sein, dass es den Behälter bei der Betriebstemperatur praktisch vollständig ausfüllt.

Bei dem erfindungsgemäß gewählten Befüllverfahren im flüssigen Zustand des Speichermediums Natriumacetat-Trihydrat hat man den Vorteil, dass beim Abkühlen des Befüllmittels bis zum Erstarrungspunkt sich das Volumen des Speichermediums nur um ca. 3% verringert. Beim anschließenden Aufheizen bzw. Erwärmen des Befüllmittels dehnt es sich in sein ursprüngliches Volumen 100 % bei 90 °C aus. Damit weist das erfindungsgemäße Speicherelement seine größte mögliche Energiedichte und Speicherkapazität auf.

Die maximale Betriebstemperatur des Latent-Schichtspeichers beträgt im normalen Betriebsverhalten in einer Heizungsanlage 90 °C. Sollte durch ein großes Energieangebot durch die Solaranlage die Betriebstemperatur im Schichtspeicher über 90° C ansteigen können, so ist dies beim erfindungsgemäßen Befüllverfahren bereits berücksichtigt. Maximale Betriebstemperaturen bis zum 100 °C sind möglich. Eine Betriebstemperatur über 100 °C wird durch eine zwangsweise Abschaltung der Energiezufuhr zu einem Sicherheitstemperaturbegrenzer verhindert.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: einen schematischen Schnitt durch einen Latent-Schichtspeicher mit erfindungsgemäßen Speicherelementen,
- Fig. 2: einen vergrößerten Schnitt durch ein Speicherelement nach dem Befüllen und Einbringen des Stahlniets in die Einfüllöffnung und
- Fig. 3: einen Schnitt durch das Speicherelement nach Fig. 1 im abgekühlten Zustand nach dem Verfestigen des Natriumacetat-Trihydrats.

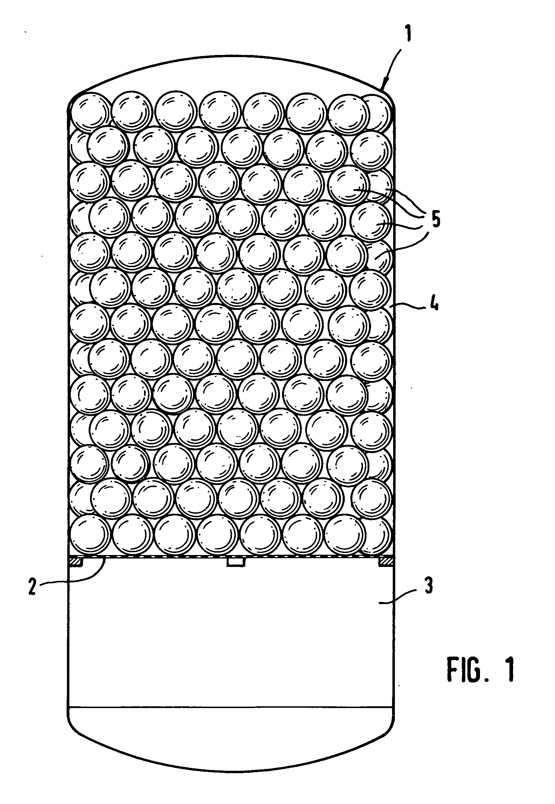

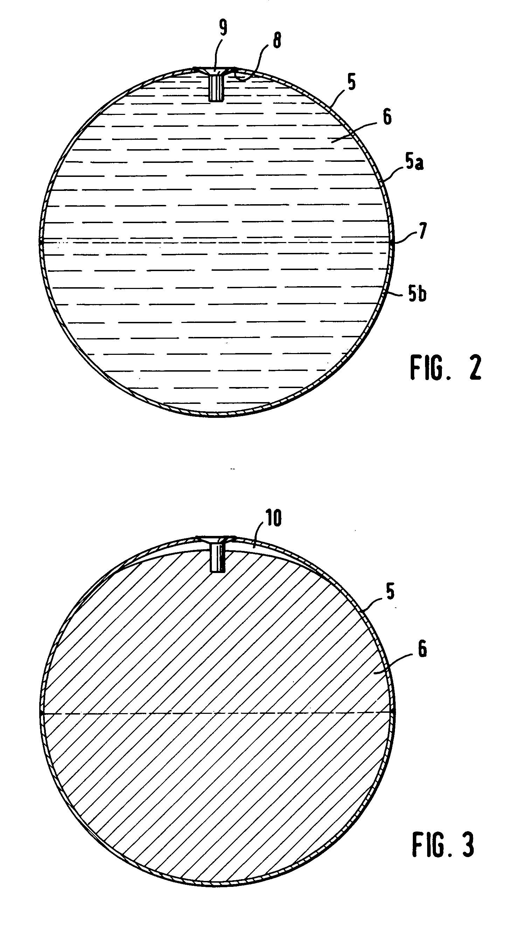

In Fig. 1 erkennt man schematisch den Aufbau eines Latent-Schichtspeichers mit einem Außenbehälters 1, der durch ein Lochblech 2 in zwei ungleich große übereinanderliegende Teilinnenräume 3 und 4 unterteilt ist. In den oberen Teilraum 4. sind kugelförmige Speicherelemente 5 eingebracht, die - wie man aus den Fig. 2 und 3 besser erkennen kann - aus einem aus Stahl bestehenden kugelförmigen Behälter 5 und einem in diesen eingebrachten Speichermedium mit hohem Enthalpiegehalt, vorzugsweise Natriumacetat-Trihydrat, bestehen. Der Behälter 5 ist aus zwei Halbkugeln 5a und 5b aufgebracht, die längs einer Schweißnaht 7 miteinander verschweißt sind. Vor oder nach dem Zusammenschweißen ist in die Behälterhalbkugel 5a eine Einfüllöffnung 8 eingebohrt worden, durch die das auf ca. 90 °C erhitzte Natruimacetat-Trihydrat bis zum vollständigen Füllen der Kugel eingefüllt wird, die anschließend sofort mithilfe eines Stahlniets 9 verschlossen wird , der mit dem Behälter 5 verschweißt wird. Das Einfüllen des hießen Natriumacetat-Trihydrats erfolgt in den kalten Behälter, also einen Behälter, der sich etwa auf Zimmertemperatur befindet. Im abgekühlten Zustand mit dem inzwischen wieder verfestigten Natriumacetat-Trihydrat füllt dieses Latent-Speichermedium 6 den Behälter 5 mit Ausnahme eines etwa 3 % des Gesamtvolumens betragenden oberen Abschnitts 10 nahezu vollständig aus.

Durch diese erfindungsgemäße Fertigung der Speicherelemente, die typischerweise einen Durchmesser von etwa 100 mm bei einer Behälterwandstärke zwischen 0,6 und 1,2 mm aufweisen können, ergeben sich optimale Verhältnisse, indem die Kugeln jeweils die größtmögliche Energiedichte und Speicherkapazität aufweisen.

## Patentansprüche

1. Speicherelement für Latent-Schichtspeicher, insbesondere für die Raumheizung, mit einem vorzugsweise kugelförmigen Behälter für ein Speichermedium mit hohem Enthalpiegehalt, **dadurch gekennzeichnet, dass** der kugelförmige, vorzugsweise aus zwei Halbkugeln (5a, 5b) zusammengesetzte, Behälter (5) eine durch einen Niet (9) od. dgl. verschließbare Einfüllöffnung (8) für das zuvor verflüssigte Speichermedium (6) aufweist.

2. Speicherelement nach Anspruch 1, **dadurch gekennzeichnet, dass** das Speichermedium (6) Natriumacetat-Trihydrat ist.

3. Speicherelement nach Anspruch 1 oder 2, **dadurch gekennzeichnet, dass** der Behälter (5) aus Stahl besteht.

4. Speicherelement nach Anspruch 3, **dadurch gekennzeichnet, dass** der Behälter aus V2A oder V4A Stahl besteht.

5. Speicherelement nach Anspruch 3 oder 4, **dadurch gekennzeichnet, dass** der Behälter (5) eine Wandstärke von 0,6 bis 1,2 mm aufweist.

6. Verfahren zur Herstellung eines Speicherelements nach einem der Ansprüche 1 bis 3, **dadurch gekennzeichnet, dass** das Speichermedium auf eine Temperatur oberhalb seines Verflüssigungspunktes erhitzt und über die Einfüllöffnung in den kalten Behälter eingefüllt und anschließend sofort die Einfüllöffnung verschlossen wird.

7. Verfahren nach Anspruch 4, **dadurch gekennzeichnet, dass** die Einfülltemperatur des verflüssigten Speichermediums so gewählt ist, dass es den Behälter bei der Betriebstemperatur praktisch vollständig ausfüllt.

8. Verfahren nach Anspruch 6 oder 7, **dadurch gekennzeichnet, dass** Natriumacetat-Trihydrit mit einer Temperatur von 90 °C in den Behälter eingefüllt wird.
